# EUROPEAN PATENT APPLICATION

(11) **EP 3 467 617 A1**
(43) Date of publication of application: **10.04.2019**
(21) Application number: 17194607.2
(22) Date of filing: 03.10.2017
(51) Int. Cl.: G06F 3/01, G02B 27/01

(54) **APPARATUS AND ASSOCIATED METHODS FOR REDUCING A LIKELY SICKNESS OF A VIEWER OF IMMERSIVE VISUAL CONTENT**

(71) Applicant: Nokia Technologies Oy, 02610 Espoo (FI)
(72) Inventor: Baykaner,, Khan, Upper Cambourne, Cambridgeshire CB23 6BL (GB)
(74) Representative: Potter Clarkson

(57) **Abstract**

An apparatus comprising at least one processor; and at least one memory including computer program code, the at least one memory and the computer program code configured to, with the at least one processor, cause the apparatus to: in respect of immersive visual content within a field of view of a viewer of the immersive visual content, determine whether a predicted sickness risk factor for the viewer of the immersive visual content meets a sickness threshold and, if so, adjust one or more of lag and flicker in the immersive visual content to reduce the likely sickness for the viewer when viewing the immersive visual content within the same field of view.

## Description

### Technical Field

The present disclosure relates to apparatus and methods associated with immersive visual content, such as virtual reality, and improving the usability of such technology.

Some examples may relate to portable electronic devices, in particular, so-called hand-portable electronic devices which may be hand-held in use (although they may be placed in a cradle in use). Such hand-portable electronic devices include so-called Personal Digital Assistants (PDAs) and tablet PCs. Certain portable electronic devices may be wearable, such as on the wrist or head. The portable electronic devices/apparatus according to one or more disclosed example aspects/embodiments may provide one or more audio/text/video communication functions (e.g. telecommunication, videocommunication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Recent developments in technology include devices providing immersive content, such as virtual reality technology providing an immersive visual environment for a user, and perhaps also surround sound audio and/or haptic feedback.

The listing or discussion of a prior-published document or any background in this specification should not necessarily be taken as an acknowledgement that the document or background is part of the state of the art or is common general knowledge.

### Summary

According to a first aspect, there is provided an apparatus comprising: at least one processor; and at least one memory including computer program code, the at least one memory and the computer program code configured to, with the at least one processor, cause the apparatus to:
in respect of immersive visual content within a field of view of a viewer of the immersive visual content, determine whether a predicted sickness risk factor for the viewer of the immersive visual content meets a sickness threshold and, if so, adjust one or more of lag and flicker in the immersive visual content to reduce the likely sickness for the viewer when viewing the immersive visual content within the same field of view.

The immersive visual content may comprise virtual reality or augmented reality.

In some examples the apparatus may be configured to receive the predicted sickness risk factor for the viewer, and receive the sickness threshold, determine whether the threshold is met or not, and output/signal an indication of whether the threshold is met or not. In some examples the apparatus may be configured to perform further operations.

The apparatus may adjust the one or more of lag and flicker directly or indirectly.

In some examples the apparatus may be configured to provide the immersive visual content. In such examples the apparatus may be configured to directly adjust the one or more of lag and flicker of the immersive visual content to reduce the likely sickness for the viewer. This can be considered direct adjustment.

In some examples the apparatus may be separate from an immersive visual content display apparatus. In such examples the apparatus may be configured to indirectly adjust the one or more of lag and flicker of the immersive visual content by providing an indication/signal to an immersive visual content display apparatus displaying the immersive visual content, to adjust the one or more of lag and flicker to reduce the likely sickness for the viewer. This can be considered indirect adjustment.

In some examples the apparatus may be configured to determine the adjustment(s) to make. In some examples the apparatus may be configured to indicate/signal to an adjustment apparatus that an adjustment is required, and it is the adjustment apparatus which is configured to determine the adjustment(s) to make to reduce the likely sickness for the viewer. This can be considered indirect adjustment.

In some examples, the apparatus may be configured to gradually adjust one or more of lag and flicker in the immersive visual content in a plurality of partial adjustments, wherein each of the plurality of partial adjustments is configured to adjust the one or more of lag and flicker in the immersive visual content by a predetermined adjustment increment, to reduce the likely sickness caused each partial adjustment in the one or more of lag and flicker. Thus, the predetermined adjustment increment may be set to be an adjustment in the one or more of lag and flicker that is small enough to avoid/mitigate an increase in the likely sickness of the viewer due to the partial adjustment. There may be a predetermined adjustment delay between each partial adjustment, to provide the viewer with time to acclimatise to the adjusted immersive visual content.

The apparatus may be configured to adjust the one or more of lag and flicker in the immersive visual content to reduce the likely sickness for the viewer to a level below the sickness threshold.

In other examples, the reduction may be to a level which is still above the sickness threshold. For example, if the reduction is performed in a plurality of stages to mitigate against increasing the likely sickness of the viewer due to a single sudden noticeable reduction, after one or more stages the predicted sickness risk factor may still be above the sickness threshold.

The apparatus may be configured to adjust the one or more of lag and flicker by causing a reduction of active computational processes of an immersive visual content apparatus providing the immersive visual content, to make one or more of processing capacity and memory capacity of the immersive visual content apparatus available for use in providing the immersive visual content with reduced one or more of lag and flicker.

In this case the apparatus may cause an increase in the processing power available and/or the available memory to provide the immersive visual content, and in doing so, reduce the lag and/or flicker experienced by the viewer in viewing the immersive visual content. This process may be considered to be controlling the operating system of an immersive visual content provider to adjust the one or more of lag and flicker. The operating system may be considered the part of the apparatus/device which is used to control the apparatus/device generally, including all programs running on the apparatus/device, as well as managing access to different elements of built-in or connected hard-ware, managing permissions to access data, and begin new processes. It may manage the hardware and software resources for the entire apparatus/device.

Active computational processes may comprise one or more background processes running alongside the processes providing the immersive visual content on the immersive visual content apparatus. A background process may be defined as an application or process which is running, but is not currently being displayed or directly interacted with by the user. Examples of background processes/applications include logging, system monitoring, scheduling and user notifications, as well as other applications initiated by the user but intended to be de-prioritised relative to the user's immersive visual experience, such as downloading, moving and copy data, connecting to external devices, or otherwise processing data not related to the primary application producing the immersive visual experience.

The apparatus may be configured to predict the sickness risk factor for the viewer.

The apparatus may be configured to predict the sickness risk factor based on one or more of: a received vestibular sensor input indicating a current vestibular state of the viewer; a received viewer sickness rating indicating the likelihood of the viewer experiencing sickness; and a received user demographic rating indicating the likelihood of a user experiencing sickness who shares one or more demographic factors with the viewer. These factors may be considered user-dependent factors.

The apparatus may be configured to predict the sickness risk factor based on a received predetermined immersive visual content sickness rating indicating the likelihood of the currently provided immersive visual content inducing sickness in a viewer. The rating may, for example, be an absolute value (e.g. a score out of 10) or a relative value (e.g. relative to other immersive visual content). This factor may be considered a user-independent factor and a content-dependent factor.

The apparatus may be configured to adjust the one or more of lag and flicker by one or more of:
causing a reduction in graphical complexity of the immersive visual content within the field of view;
causing simpler physical models to be used to simulate motion in the immersive visual content within the field of view;
causing a reduction in acceleration of one or more visual elements in the immersive visual content within the field of view; and
causing a reduction in motion blur of one or more visual elements in the immersive visual content within the field of view.

In such cases the apparatus may adjust the immersive visual content which is output to the viewer without changing the field of view, and in doing so, reducing the lag and/or flicker experienced by the viewer in viewing the adjusted immersive visual content. This process may be considered to be controlling the user-facing application to adjust the one or more of lag and flicker. The user-facing application is that which is providing the immersive visual (and possible audio and/or haptic) content to the user, as well as any additional necessary computation required to generate and/or render future content.

The apparatus may be configured to:
if the predicted sickness risk factor meets the sickness threshold for a predetermined period of time; preload a next portion of the immersive visual content with a reduced predicted sickness risk factor, the next portion comprising one or more of the following factors reduced compared with the current immersive visual content:
   graphical quality;
   physical model complexity;
   acceleration of one or more visual elements in the immersive visual content; and
   motion blur of one or more visual elements in the immersive visual content.

The apparatus may be configured to adjust flicker in the immersive visual content by performing flicker reduction for visual items at the periphery of the viewer's field of view by a greater amount than the flicker reduction performed for visual items at the centre of the viewer's field of view.

The apparatus may be configured to:
periodically determine whether the predicted sickness risk factor for the viewer of the immersive visual content meets the sickness threshold with a frequency based on one or more of:
   a predetermined time period for checking if the sickness threshold is met;
   the predicted sickness risk factor for the user changing by a predetermined amount; and
   the rate of change of the sickness risk factor for the user changing by a predetermined amount.

The apparatus may be configured to:
determine that the predicted sickness risk factor for the viewer of the immersive visual content exceeds the sickness threshold by an amount greater than can be reduced by adjusting one or more of lag and flicker in the immersive visual content to reduce the likely sickness for the viewer; and one or more of
provide an indication to the viewer that sickness is likely; and
stop provision of the immersive visual content to the viewer.

The apparatus may be configured to:
determine physical feedback to be provided to the viewer, the physical feedback configured to reduce the likely sickness of the viewer by adjusting a vestibular status of the viewer; and
provide the determined physical feedback to the viewer.

In some examples, the apparatus may determine, but not itself provide, determined physical feedback, e.g. by passing on an indication of what physical feedback is required to a feedback provision apparatus. Physical feedback may be, for example, applying vibrations to the viewer to help counteract a feeling of sickness. This may be achieved, for example, using a bone-conducting speaker in a viewer's headset. If there is an indication that the user is experiencing, or is likely to experience nausea/VR sickness, the speaker may be used to trick the vestibular system by applying vibrations to, e.g. correct left-right asynchronicity of vibration in the user and change the user's perception of balance, thereby reducing the risk of VR sickness.

The apparatus may be configured to predict the sickness risk factor for the viewer using a machine learning model, wherein the machine learning model has been pre-trained using one or more of:
prior captured sickness data for the viewer; and
prior captured sickness data for one or more users who share one or more demographic factors with the viewer.

The sickness threshold may be set for the viewer based on one or more of:
previous sickness data for the viewer obtained during viewing immersive visual content; and
previous sickness data for one or more users who share one or more demographic factors with the viewer.

According to a further aspect, there is provided a computer-implemented method comprising: in respect of immersive visual content within a field of view of a viewer of the immersive visual content, determining whether a predicted sickness risk factor for the viewer of the immersive visual content meets a sickness threshold and, if so, adjusting one or more of lag and flicker in the immersive visual content to reduce the likely sickness for the viewer when viewing the immersive visual content within the same field of view.

The steps of any method disclosed herein do not have to be performed in the exact order disclosed, unless explicitly stated or understood by the skilled person.

Corresponding computer programs for implementing one or more steps of the methods disclosed herein are also within the present disclosure and are encompassed by one or more of the described examples.

For example, in a further aspect there is provided a computer readable medium comprising computer program code stored thereon, the computer readable medium and computer program code being configured to, when run on at least one processor, perform the method comprising: in respect of immersive visual content within a field of view of a viewer of the immersive visual content, determining whether a predicted sickness risk factor for the viewer of the immersive visual content meets a sickness threshold and, if so, adjusting one or more of lag and flicker in the immersive visual content to reduce the likely sickness for the viewer when viewing the immersive visual content within the same field of view.

One or more of the computer programs may, when run on a computer, cause the computer to configure any apparatus, including a battery, circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

One or more of the computer programs may be provided on a computer readable medium, which may be a physical computer readable medium such as a disc or a memory device, may be a non-transient medium, or may be embodied as a transient signal. Such a transient signal may be a network download, including an internet download.

The present disclosure includes one or more corresponding aspects, examples or features in isolation or in various combinations whether or not specifically stated (including claimed) in that combination or in isolation. Corresponding means (e.g. immersive visual content provider, predicted sickness risk factor:sickness threshold comparator, sickness threshold attainment determiner, lag adjuster, flicker adjuster) for performing one or more of the discussed functions are also within the present disclosure.

The above summary is intended to be merely exemplary and non-limiting.

### Brief Description of the Figures

A description is now given, by way of example only, with reference to the accompanying drawings, in which:-
Figure 1 shows an example apparatus according to the present disclosure;
Figure 2 illustrates another example apparatus according to the present disclosure;
Figure 3 illustrates a further example apparatus according to the present disclosure;
Figure 4 illustrates schematically an example flow diagram illustrating operation of an apparatus according to the present disclosure;
Figure 5 illustrates schematically factors which may be taken into account in determining the predicted sickness risk factor according to the present disclosure;
Figures 6a-6e illustrates schematically examples of adjusting immersive visual content according to the present disclosure;
Figure 7 illustrates schematically an example organisation diagram illustrating operation of an apparatus according to the present disclosure;
Figure 8 shows the main steps of a method of using the present apparatus; and
Figure 9 shows a computer-readable medium comprising a computer program configured to perform, control or enable the method of at least Figure 8.

### Description of Specific Examples

Users may experience "immersive content", such as virtual reality (VR, wherein images, sounds and/or other sensations are provided to simulate a user's physical presence in a virtual or imaginary environment), or augmented reality (AR, a live view of a physical, real-world environment which is "augmented" by additional computer-generated sensory input such as sound, video, graphics or GPS data). Some users may experience a feeling of disorientation due to experiencing computer-generated stimuli in an immersive environment.

VR content consumption can induce so-called "VR sickness" in users, with symptoms potentially including nausea, dizziness and vertigo. Similar symptoms may be experienced for certain users within an AR environment (this may, for example, be referred to as "AR sickness"). Some mechanism for avoiding these unpleasant experiences may benefit users who suffer from VR/AR sickness.

The causes of VR/AR sickness, as with motion sickness, may arise due to specific disagreements between sensory information reaching the brain from different modalities (the real world and the virtual world). VR/AR sickness may occur as a result of a lag between physical motion and visual computer-generated feedback related to that physical motion. For example, if a user is using an immersive VR apparatus, and moves his arm in what would be his real-world field of vision, a computer-generated image of the user's arm would also move in the user's computer-generated field of vision. If there is a delay between his physical arm movement, and the display of his arm in the computer-generated field of view (FOV), this "lag" may be disorienting for the user. VR/AR sickness may also arrive due to flicker in the computer-generated images, either in particular synthetic/computer generated elements or in the entire frame being viewed by the user. Flicker may be defined as a visible fading between cycles displayed on a video display.

Naturally it is important for developers and content creators to want to limit the possibility of user feeling unwell due to viewing VR/AR content. However, it may restrict the possibilities of content creators if they are not permitted to include any features which, for artistic reasons, would enhance the user experience and increase the quality (e.g. realism or sophistication) of the VR/AR content, such as fast accelerations, multiple concurrent moving objects in the FOV, or flickering, for example. In some cases, if the frame rate is below 75 frames per second, this may be a cause of VR/AR sickness. Factors which may contribute to reducing the risk of VR/AR sickness include minimising the size and frequency of accelerations, minimising latency and dropped frames, and including no or fewer flashing images or fine repeating textures.

It is important to obtain a solution for detecting and mitigating user VR/AR sickness for high quality VR/AR content to be created and provided, which allows content creators as much artistic control as possible.

Apparatus described herein comprise at least one processor; and at least one memory including computer program code. The at least one memory and the computer program code are configured to, with the at least one processor, cause the apparatus to, in respect of immersive visual content within a field of view of a viewer of the immersive visual content, determine whether a predicted sickness risk factor for the viewer of the immersive visual content meets a sickness threshold and, if so, adjust one or more of lag and flicker in the immersive visual content to reduce the likely sickness for the viewer when viewing the immersive visual content within the same field of view.

In maintaining the same field of view, the viewer's sensation of being immersed in the visual content is not reduced compared with a scenario in which the viewer's field of view is reduced.

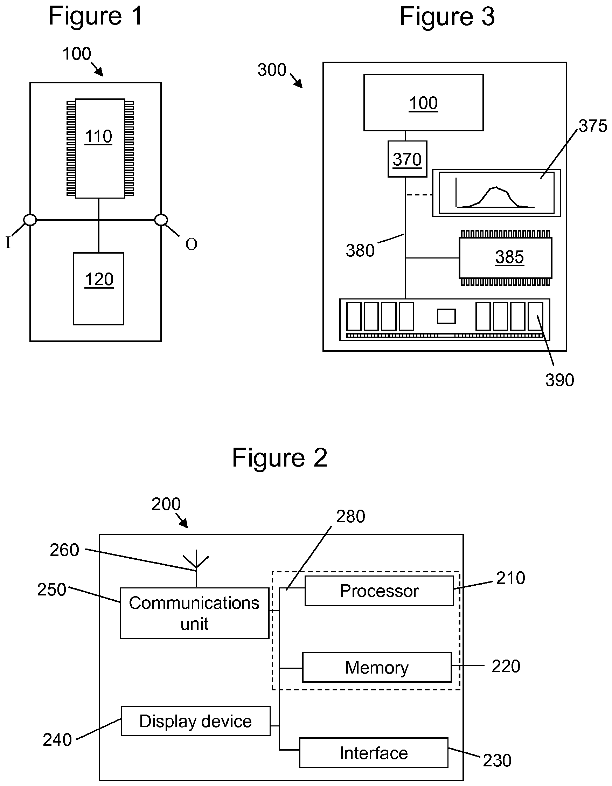

Figure 1 shows an apparatus 100 comprising a processor 110, memory 120, input I and output O. In this example only one processor and one memory are shown but it will be appreciated that other examples may utilise more than one processor and/or more than one memory (e.g. same or different processor/memory types). The apparatus 100 may be or may comprise an application specific integrated circuit (ASIC). The apparatus 100 may be or may comprise a field-programmable gate array (FPGA). The apparatus 100 may be a module for a device, or may be the device itself, wherein the processor 110 is a general-purpose CPU and the memory 120 is general purpose memory.

The input I allows for receipt of signalling to the apparatus 100 from further components. The signalling may represent the detected motion of a user, for example. The output O allows for onward provision of signalling from the apparatus 100 to further components. For example, a signal to adjust provided immersive visual content, to adjust the lag and/or the flicker in the content, may be output to the content providing device. In this example the input I and output O are part of a connection bus that allows for connection of the apparatus 100 to further components. The processor 110 is a general-purpose processor dedicated to executing/processing information received via the input I in accordance with instructions stored in the form of computer program code on the memory 120. The output signalling generated by such operations from the processor 110 is provided onwards to further components via the output O.

The memory 120 (not necessarily a single memory unit) is a computer readable medium (such as solid state memory, a hard drive, ROM, RAM, Flash or other memory) that stores computer program code. This computer program code stores instructions that are executable by the processor 110, when the program code is run on the processor 110. The internal connections between the memory 120 and the processor 110 can be understood to provide active coupling between the processor 110 and the memory 120 to allow the processor 110 to access the computer program code stored on the memory 120.

In this example the input I, output O, processor 110 and memory 120 are electrically connected internally to allow for communication between the respective components I, O, 110, 120, which may be located proximate to one another as an ASIC. In this way the components I, O, 110, 120 may be integrated in a single chip/circuit for installation in an electronic device. In other examples, one or more or all of the components may be located separately (for example, throughout a portable electronic device such as devices 200, 300, or within a network such as a "cloud" and/or may provide/support other functionality).

One or more examples of the apparatus 100 can be used as a component for another apparatus as in Figure 2, which shows a variation of apparatus 100 incorporating the functionality of apparatus 100 over separate components. In other examples the device 200 may comprise apparatus 100 as a module (shown by the optional dashed line box) for a mobile phone or PDA or audio/video player or the like. Such a module, apparatus or device may just comprise a suitably configured memory and processor.

The example apparatus/device 200 comprises a display 240 such as, a Liquid Crystal Display (LCD), e-Ink, or touch-screen user interface (like a tablet PC). The device 200 is configured such that it may receive, include, and/or otherwise access data. For example, device 200 comprises a communications unit 250 (such as a receiver, transmitter, and/or transceiver), in communication with an antenna 260 for connection to a wireless network and/or a port (not shown). Device 200 comprises a memory 220 for storing data, which may be received via antenna 260 or user interface 230. The processor 210 may receive data from the user interface 230, from the memory 220, or from the communication unit 250. Data may be output to a user of device 200 via the display device 240, and/or any other output devices provided with apparatus. The processor 210 may also store the data for later use in the memory 220. The device contains components connected via communications bus 280.

The communications unit 250 can be, for example, a receiver, transmitter, and/or transceiver, that is in communication with an antenna 260 for connecting to a wireless network and/or a port (not shown) for accepting a physical connection to a network, such that data may be received via one or more types of network. The communications (or data) bus 280 may provide active coupling between the processor 210 and the memory (or storage medium) 220 to allow the processor 210 to access the computer program code stored on the memory 220.

The memory 220 comprises computer program code in the same way as the memory 120 of apparatus 100, but may also comprise other data. The processor 210 may receive data from the user interface 230, from the memory 220, or from the communication unit 250. Regardless of the origin of the data, these data may be outputted to a user of device 200 via the display device 240, and/or any other output devices provided with apparatus. The processor 210 may also store the data for later use in the memory 220.

Device/apparatus 300 shown in Figure 3 may be an electronic device (including a tablet personal computer), a portable electronic device, a portable telecommunications device, a wearable electronic device, or a module for such a device. The apparatus 100 can be provided as a module for device 300, or even as a processor/memory for the device 300 or a processor/memory for a module for such a device 300. The device 300 comprises a processor 385 and a storage medium 390, which are electrically connected by a data bus 380. This data bus 380 can provide an active coupling between the processor 385 and the storage medium 390 to allow the processor 380 to access the computer program code.

The apparatus 100 in Figure 3 is electrically connected to an input/output interface 370 that receives the output from the apparatus 100 and transmits this to the device 300 via data bus 380. Interface 370 can be connected via the data bus 380 to a display 375 (touch-sensitive or otherwise) that provides information from the apparatus 100 to a user. Display 375 can be part of the device 300 or can be separate. The device 300 also comprises a processor 385 that is configured for general control of the apparatus 100 as well as the device 300 by providing signalling to, and receiving signalling from, other device components to manage their operation.

The storage medium 390 is configured to store computer code configured to perform, control or enable the operation of the apparatus 100. The storage medium 390 may be configured to store settings for the other device components. The processor 385 may access the storage medium 390 to retrieve the component settings in order to manage the operation of the other device components. The storage medium 390 may be a temporary storage medium such as a volatile random access memory. The storage medium 390 may also be a permanent storage medium such as a hard disk drive, a flash memory, or a nonvolatile random access memory. The storage medium 390 could be composed of different combinations of the same or different memory types.

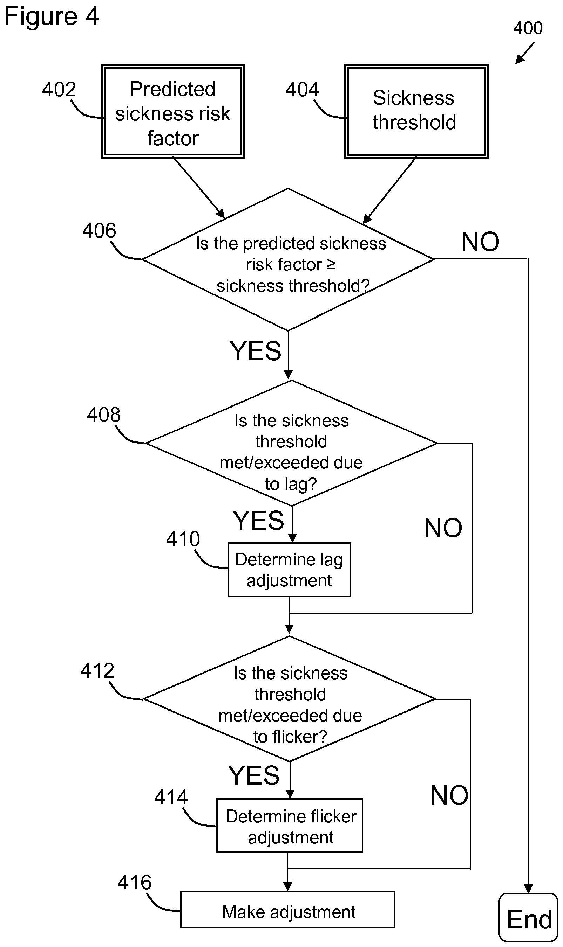

Figure 4 illustrates an example flow diagram illustrating operation of an apparatus according to the present disclosure. The steps of Figure 4 may be performed by an apparatus 100, 200, 300 such as those illustrated in Figures 1-3.

A user may be viewing immersive visual content, either VR or AR. The viewer can see the content in a field of view (FOV), which is the region of the provided immersive visual content visible to the user at any one time. An apparatus may receive (or determine) a predicted sickness risk factor 402, which is a measure of how likely the content in the current FOV of the user is to induce VR/AR sickness. The apparatus may also receive (or determine) a sickness threshold 404. If the predicted sickness risk factor 402 is above the sickness threshold 404, the user is more likely to experience VR/AR sickness, and if the predicted sickness risk factor 402 is below the sickness threshold 404, the user is not likely to experience VR/AR sickness. It is desirable for the predicted sickness risk factor 402 to be below the sickness threshold 404, then the user is unlikely to experience VR/AR sickness and can enjoy the immersive visual content.

In the example of Figure 4, the apparatus is configured to check 408, 412 whether an adjustment to both the lag and the flicker may be made, and determine the adjustment(s) 410, 414 if it is determined that an adjustment(s) is/are required. In other examples the apparatus may determine that an adjustment or adjustments are required 408, 412 and provide that data to another apparatus which determines what adjustment(s) to make.

In some examples, the apparatus may be configured to adjust the one or more of lag and flicker in the immersive visual content to reduce the likely sickness for the viewer to a level below the sickness threshold. In some examples, the lag and/or flicker may be reduced, but the predicted sickness risk-factor after adjustment may still be above the sickness threshold. In some examples, the apparatus may simply determine that an adjustment or adjustments is/are required, and provide a signal to another apparatus to inform it to adjust the lag and/or the flicker.

Stepping through the stages indicated in Figure 4, firstly the apparatus receives a predicted sickness risk factor 402 and a sickness threshold 404.

The apparatus determines 406 if the predicted sickness risk factor 402 is equal to or exceeds the sickness threshold 404. If it does, then further steps are carried out. adjust one or more of lag and flicker in the immersive visual content to reduce the likely sickness for the viewer when viewing the immersive visual content within the same FOV. If it does not, this indicates that the viewer is not likely to experience VR/AR sickness, and the apparatus ends it operation.

The apparatus may be configured to repeat the process of checking for the likelihood of VR/AR sickness 406 periodically. The apparatus may be configured to periodically determine whether the predicted sickness risk factor for the viewer of the immersive visual content meets the sickness with a frequency based on a predetermined time period for checking if the sickness threshold is met (for example, every 10 seconds, every 30 seconds, every minute, every 5 minutes, or more or less regularly than these examples). The apparatus may make the determination with a frequency based on the predicted sickness risk factor for the user changing by a predetermined amount. For example, if the predicted sickness risk factor increases by a predetermined interval (e.g. by one point on a scale of one to ten) the apparatus may perform at least comparison step 406 again. The apparatus may make the determination with a frequency based on the rate of change of the sickness risk factor for the user changing by a predetermined amount. For example, if the rate of change of predicted sickness risk factor is determined to be one point per second, where the predicted sickness risk factor is measured on a scale of one to 100, the apparatus may perform at least comparison step 406 again. Any combination of one or more of these scenarios may cause the apparatus to re-check if the predicted sickness risk factor exceeds the sickness threshold 406.

If the apparatus determines 406 the predicted sickness risk factor 402 is equal to or exceeds the sickness threshold 404, then the apparatus goes on to check if the sickness threshold is met or exceeded due to lag in the provided immersive visual content 408.

If the predicted sickness risk factor is determined to meet or exceed the sickness threshold due to lag, then the apparatus in this example determines an adjustment to make to the provided immersive visual content which will act to reduce the lag in the immersive visual content 410. This may be termed a "lag adjustment". The apparatus then goes on to check if the sickness threshold is met or exceeded due to flicker in the provided immersive visual content 412.

If the predicted sickness risk factor is determined not to meet the sickness threshold due to lag, then the apparatus goes on to check if the sickness threshold is met or exceeded due to flicker in the provided immersive visual content 412.

If the predicted sickness risk factor is determined to meet the sickness threshold due to flicker, then the apparatus in this example determines an adjustment to make to the provided immersive visual content which will act to reduce the flicker in the immersive visual content 414. This may be termed a "flicker adjustment".

The apparatus then goes on make the adjustment 416 which is based on adjusting the lag, and/or adjusting the flicker, in the immersive visual content, according to the determined causes of the predicted sickness risk factor meeting the sickness threshold in steps 408 and 412.

If the predicted sickness risk factor is determined 412 not to meet the sickness threshold due to flicker, and it also determined 408 that the predicted sickness risk factor is determined not to meet the sickness threshold due to lag, then the apparatus may perform a further check, such as re-performing the comparison between predicted sickness risk factor and sickness threshold 406, providing an error message, or performing a further check to determine what the cause of the predicted sickness risk factor meeting the sickness threshold might be (for example, if the user behaviour, such as sudden or erratic movements, is a cause for an increased predicted sickness risk factor).

It will be appreciated that the apparatus may check the effect of flicker on the predicted sickness risk factor 412 before checking the effect of lag 408 in some examples. The apparatus may check the effects of lag and flicker 408, 412 at the same time in some examples.

In some examples, the apparatus may be configured to determine that the predicted sickness risk factor for the viewer of the immersive visual content exceeds the sickness threshold by an amount greater than can be reduced by adjusting one or more of lag and flicker in the immersive visual content to reduce the likely sickness for the viewer. In such examples, the apparatus may provide an indication to the viewer that sickness is likely (such as a computer-generated visual overlay over the VR/AR content, or an audio warning). The apparatus may also, or instead, stop provision of the immersive visual content to the viewer. This may be considered a safety cut-out to prevent sickness in the user.

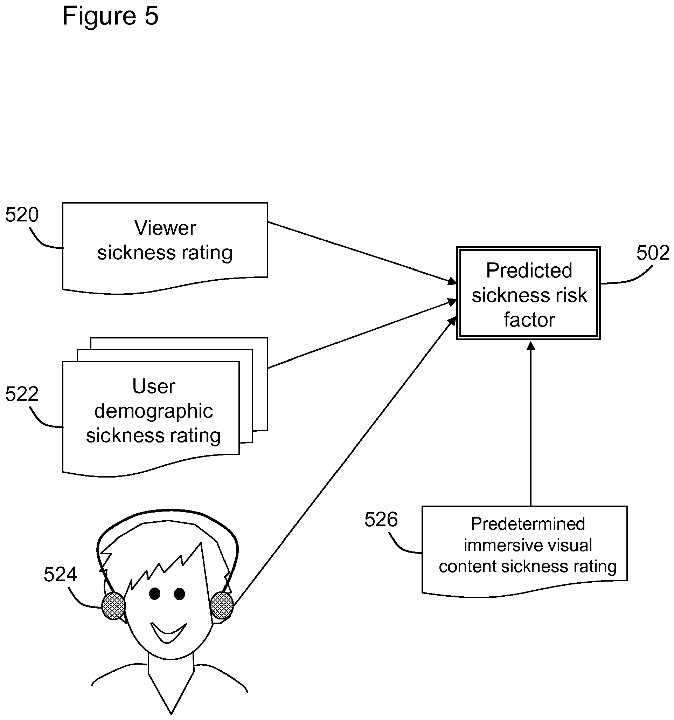

Figure 5 illustrates factors which may be considered in determining the predicted sickness risk factor 502. In some examples the apparatus may be configured to predict the sickness risk factor for the viewer, for example by taking in one or more indicating factors 520, 522, 524, 526 as input and calculating the predicted sickness risk factor 502. In some examples a separate apparatus may determine the predicted sickness risk factor 502 and provide it as input to the apparatus which then determines whether a sickness threshold has been met.

In examples where the apparatus determines the predicted sickness risk factor, one or more indicating factors 520, 522, 524, 526 may be taken as a basis for calculating the predicted sickness risk factor. One indicating factor is a received vestibular sensor input 524 indicating a current vestibular state of the viewer. A vestibular state may be defined as the sense of balance and/or spatial orientation provided by the sensory system of a user, for the purpose of coordinating movement with balance. Vestibular signals are used in the body to keep the body upright and help prevent a loss of balance. A vestibular sensor may be, for example, one or more gyroscopes, accelerometers, or other motion detectors worn in a head-mounted user unit (such as a virtual reality headset). Positioning vestibular sensors in the user's headset allows the sensors to be located close to the user's auditory canals for more accurate determination of a user's vestibular state, and the user would likely be wearing a headset anyway for viewing VR/AR content. In some examples, the apparatus may be configured to compare the detected motion of the user's head with the apparent motion in the provided immersive visual content, and any difference between the two motions may be used as an indication of lag in the immersive visual content, and increased lag may indicate an increased predicted sickness risk factor.

Another indicating factor is a received viewer sickness rating 520 indicating the likelihood of the viewer experiencing sickness. For example, prior to viewing the immersive visual content, the user may input a rating indicating how likely they consider themselves to suffer from VR/AR sickness. For example, a first-time user who suffers from travel/motion sickness as a car passenger may input a high personal viewer sickness rating because they think they may suffer from VR/AR sickness quite easily. A young, fit, experienced user of VR/AR systems may input a low personal viewer sickness rating because they think they are unlikely to feel sick.

Another indicating factor is a received user demographic rating 522 indicating the likelihood of a user experiencing sickness who shares one or more demographic factors with the viewer. For example, VR/AR sickness likelihood may be recorded for other users sharing one or more demographic factors with the current user, and used as input as an indicator to predict how the current user is likely to react to the immersive visual content and the likelihood of the current user to experience VR/AR sickness. Demographic factors include, for example, previous experience with immersive visual content, age, age range, gender, height, weight, profession, income, health and health issues (e.g. relating to: pregnancy, vertigo, eyesight problems, hearing problems, general fitness), geographical location, ethnicity and disability.

Another indicating factor is a received predetermined immersive visual content sickness rating 526 indicating the likelihood of the currently provided immersive visual content inducing sickness in a viewer. For example, the immersive visual content creators may consider that, due to certain effects in the content such as flashing lights, moving objects, accelerations and tilt effects, the risk of suffering VR/AR sickness is increased and a higher predetermined immersive visual content sickness rating may be given to the content. If the creators consider that the immersive visual content shows a quiet, calm scene with few moving objects, few surprising effects and gentle changes this means the inherent risk of a viewer suffering VR/AR sickness due to the nature of the content is low, and the creators can give a low predetermined immersive visual content sickness rating to the content.

A predicted sickness risk factor may be expressed, for example, a score out of 100, a colour code (e.g. red - high-risk, amber - medium-risk, green - low-risk), a text label on a graded scale, or a grade (e.g. A, B, C).

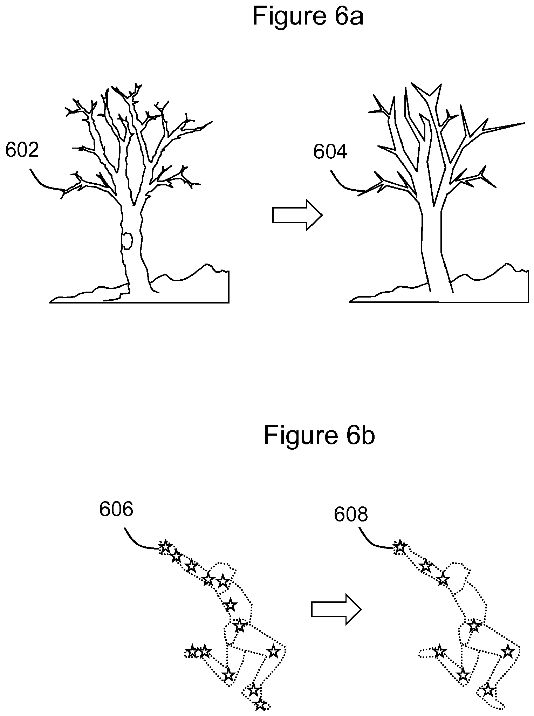

Figures 6a-6e illustrate examples of adjusting immersive visual content. The adjustments may reduce the lag and/or the flicker in the video output. Figure 6a shows, on the left, a scene of a tree 602 in a high level of detail in the FOV of the viewer. By reducing the graphical complexity of the immersive visual content within the FOV to achieve the low detail tree 604 on the right, lag and/or flicker in the visual content may be reduced (for example, because it is computationally easier to render a less complex image).

Figure 6b shows a scene of a long jumper 606 using a complex physical model, in which each moving joint of the long jumper is indicated with a star (13 joints are shown on the complex model on the left). The high complexity of the physical model means the movement of the long jumper appears more realistic but may also require more computational power to render. By using a simpler physical model 608 as shown on the right, in this example with fewer (eight) moving joints, within the FOV, lag and/or flicker in the visual content may be reduced (for example, because it is computationally easier to render the long jumper using a simpler physical model). Other examples of adjusting physical models include using different computer animations or game physics to render a moving object, such as rigid-body and soft-body simulations, and using different techniques to render explosions.

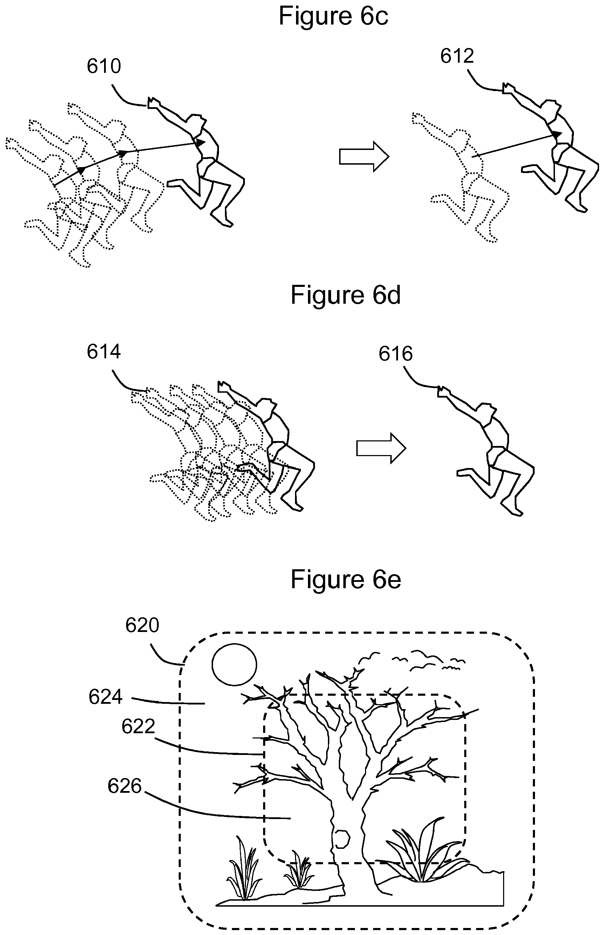

Figure 6c also shows a scene of a long jumper 610 using a complex acceleration model on the left, indicated schematically by the "shadow" images of the long jumper to show the acceleration movement of the long jumper taking off. The acceleration effects used means the movement of the long jumper appears more realistic, but may also require more computational power to render. By using reduced acceleration to show the long jumper's motion 612 (indicated schematically by fewer "shadow" images on the image on the right), within the FOV, lag and/or flicker in the visual content may be reduced (for example, because it is computationally easier to render the motion of the long jumper using reduced acceleration).

Figure 6d also shows a scene of a long jumper 614 on the left with an associated motion blur to indicate the motion of the long jumper. The motion blur may provide a desirable visual effect but may also require more computational power. By using reduced motion blur effects 616 within the FOV (in this example no motion blur is shown in the image 616 on the right), lag and/or flicker in the visual content may be reduced (for example, because it is computationally easier to render the motion of the long jumper using reduced motion blur effects).

In some examples, the predicted sickness risk factor may be determined periodically as discussed above. If it is determined that the predicted sickness risk factor is gradually increasing towards the sickness threshold, or if the predicted sickness risk factor meets the sickness threshold for a predetermined period of time, it may be beneficial to take action to prevent the risk of sickness further increasing and to reduce the riskof sickness due to the next portion of immersive visual content to be shown. The apparatus may be configured to preload a next portion of the immersive visual content with a reduced predicted sickness risk factor. The next portion would comprise one or more of the following factors (discussed above in relation to Figures 6a-6d) reduced compared with the current immersive visual content:
graphical quality;
physical model complexity;
acceleration of one or more visual elements in the immersive visual content; and motion blur of one or more visual elements in the immersive visual content.

By doing so the predicted sickness risk factor should reduce, thereby allowing the viewer to continue experiencing the immersive visual content with a reduced risk of VR/AR sickness.

Figure 6e illustrates another way in which the predicted sickness risk factor may be reduced while maintaining the viewer's FOV. The user's FOV is the portion of content 624, 626 within the outer boundary 620. The inner boundary 622 is an imaginary border indicated to demark the visual content at the centre of the viewer's FOV 626 from the visual content at the periphery of the viewer's FOV 624. Objects flickering at the periphery of the viewer's FOV may increase the viewer's sensation of VR/AR sickness to a greater extent than objects flickering in the centre of the viewer's FOV. The apparatus may be configured to adjust flicker in the immersive visual content 624, 626 by performing flicker reduction for visual items at the periphery of the viewer's FOV 624 by a greater amount than the flicker reduction performed for visual items at the centre of the viewer's FOV 626. Doing so may reduce the predicted sickness risk factor while changing the way that content is displayed in a less invasive way than simply reducing the flicker across the entire FOV uniformly.

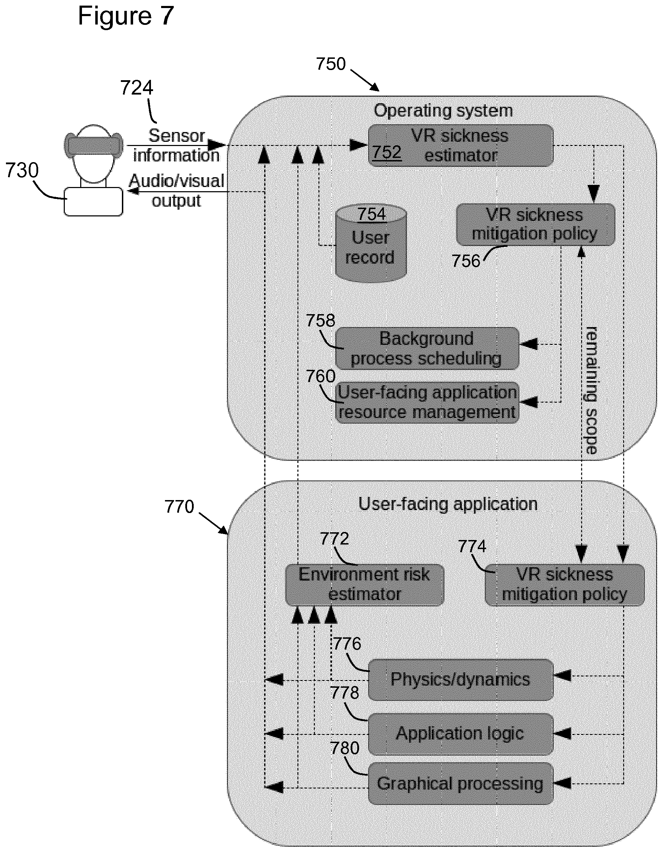

Figure 7 illustrates schematically an example organisation diagram illustrating operation of an apparatus configured to provide immersive visual content according to examples described herein. The user 730 receives audio/visual output from the apparatus, and provides sensor information 724 (e.g. vestibular sensor information) to the apparatus.

Both the operating system 750 and user-facing application 770 of the apparatus are configured to take steps to mitigate the risk of VR/AR sickness. This may be done by adjusting background process scheduling 758 in the operating system, and/or by adjusting one or more of physics/dynamics 776, application logic 778, and graphical processing 780 in the user-facing application 770, for example as described in relation to Figures 6a-6e.

The apparatus comprises an operating system element 750 and a user-facing application element 770. The apparatus is based on a feedback loop between the operating system running 750 on the apparatus and the user-facing application 770. Within the operating system is a VR sickness estimator 752 which may comprise a computational model (in other examples it may be referred to as an AR sickness estimator, a VR/AR sickness estimator, or simply a sickness estimator, depending on the content being provided to the user). It is configured to take inputs from hardware sensors 724 (e.g. accelerometers/gyroscopes placed in or near the ear pieces of a head mounted display, temperature sensors, electrodermal activity, camera, etc.). The VR sickness estimator 752 also takes input from the graphical processing module controlling the output video frames produced by the application 780 (which may be analysed by intermediate models for accelerations/dynamics if necessary). The VR sickness estimator 752 also takes user specific information 754 as input, either from the current user (e.g. duration using VR device, prior user sensitivity to VR sickness, etc.) or other users with one or more matching demographic factors. In this example user data and data for other users with matching demographics are stored in the user record 754. In some examples the user record may be remote from the apparatus. Also, the VR sickness estimator 752 takes an environment risk variable 772 from the user-facing application 770 as input. The computational model estimates/predicts the risk level of VR sickness at the VR sickness estimator 752, along with contributing factors such as lag and flicker.

The risk estimation/prediction of the sickness risk factor may be performed continually, periodically (regularly), and/or upon the occurrence of particular events (e.g. upon a scene change or visual event flagged in the immersive visual content, upon an input from a viewer vestibular sensor indicating a sudden movement, or upon a user request, for example). The VR sickness estimator model 752 may update over time according to the preferences of specific users. This may be done by inferring signals from user behaviour, or according to explicit user feedback, or by the results of a VR sickness calibration procedure, or by a combination of all three. Such updating may be part of training if the VR sickness estimator computational model 752 is a machine learning model.

The VR sickness estimator 752 provides outputs to the VR sickness mitigation policy modules 756, 774 of the operating system 750 and the user-facing application 770. The output of the VR sickness estimator 752 may be a variable giving the predicted sickness risk factor, as well as one or more variables indicating the level of contributing factors such as lag and flicker. The VR sickness mitigation policies 756, 774 in the operating system 750 and the user-facing application 770 can then take steps to mitigate the risk of VR sickness.

The VR sickness mitigation policy module 756 of the operating system 750 communicates with the background process scheduling module 758 and the user-facing application resource management module 760 of the operating system 750. The operating system 750 can pause ongoing background processes using the background process scheduling module 758, and reschedule them to resume at a later time. The operating system 750 can adjust the memory or computation processing power devoted to the user-facing application 770 using the user-facing application resource management module 760. In other words, the apparatus may be configured to adjust the one or more of lag and flicker by causing a reduction of active computational processes of an immersive visual content apparatus providing the immersive visual content, to make one or more of processing capacity and memory capacity of the immersive visual content apparatus available for use in providing the immersive visual content with reduced one or more of lag and flicker. That is, operating system resources may be freed-up to help reduce lag and/or flicker in the immersive visual content being provided.

The VR sickness mitigation policy module 756 of the operating system 750 is in communication with the VR sickness mitigation policy module 774 of the user-facing application 770. If the VR sickness estimator 752 value is relatively high but the user-facing application has an abundance of computational resources, the operating system 750 may decide not to take any action, relying upon the user-facing application 770 to take whatever steps are necessary in adjusting the generated graphical elements to address the particular contributing factor (e.g. lag, flicker).

The operating system's VR sickness mitigation policy 756 may include an extreme risk response that pauses or closes down the user-facing application 770 and warns the user if, for example, the user-facing application fails to properly manage a very high predicted sickness risk factor after some pre-determined duration. This response behaviour may optionally be set by the user in either the operating system 750 of the user-facing application 770 settings.

The VR sickness mitigation policy module 774 of the user-facing application 770 provides output indicating that an adjustment to the provided immersive content is required to the physics/dynamics module 776, the application logic module 778 and/or the graphical processing module 780. These three modules 776, 778, 780 in turn provide output to the environment risk estimator 772, provide an input back to the VR sickness estimator 752 as feedback, and also provide audio/visual output for provision to the user 730. The application logic module 778 refers to the logical flow of events in the application. For example, an application intended to display hundreds of simulated people would require graphical processing (to show the images of the people), physics/dynamics (to calculate how the people interact with the rest of the simulated world), and application logic (to calculate both how the simulated world may change according to rules of the environment, as well as to determine what decisions the simulated people would choose to make based on the rest of the environment around them).

The environment risk variable provided by the environment risk estimator 772 to the VR sickness estimator 752 is a value set by the content creator that indicates the general expectation of the capacity of the VR visual content to induce VR sickness. This utilises the content creators' prior knowledge about the designed environment. For example, the content creator may know that the current virtual environment features many fast accelerations so may set the environmental risk to be a high value, or they may know that the virtual environment is mostly static and thereby can indicate to the detection model that the environment risk factor is relatively low. These values may also be set according to tester's responses during the quality assurance stage of content creation.

The user-facing application's VR sickness mitigation policy 774 may vary depending on the nature of the application. As an example policy, if the predicted sickness risk factor is high as well as the lag estimation, then graphical settings may be temporarily decremented by the graphical processing module 780, processor intensive physics may be swapped for simpler physics approximations by the physics/dynamics module 776, and/or an inertia setting within the physics may be adjusted (limiting accelerations) by the physics/dynamics module 776 until the lag estimation is sufficiently reduced. These adjustments may be presets designed by the content creator for just such occasions. As another example policy, if the predicted sickness risk factor is high as well as the flicker estimation, motion blur effects may be temporarily adjusted/reduced, and the maximum flicker rate of objects on the scene may be reduced to reduce flicker in the immersive visual content. As another example policy, if the predicted sickness risk factor has recently/often been high, the next scene/environment may be pre-loaded in a low risk pre-set mode (e.g. with relatively safer graphical and dynamic elements).

These example policy elements illustrate that an immersive visual content creator may be able to design variations on the intended content that allow users with different hardware to still enjoy the content without risk, or with reduced risk, of VR sickness, even though some hardware systems will be capable of more intensive processing than others.

In addition to VR sickness mitigation policies, the operating system 750 and the user-facing application 770 may continuously send a remaining scope signal to each other as indicated in Figure 7. This is a type of feedback system. The remaining scope is a value indicating the scope left within the operating system 750 and the scope left within the user-facing application 770 to make further changes to mitigate the risk of VR sickness. This allows both policies 756, 774 to manage upcoming changes better. For example, a user-facing application 770 may opt not to take any action to mitigate an elevated risk of VR sickness because the operating system 750 indicates that it has a high scope left to mitigate the elevated risk and is about to take those steps, e.g. by allocating an increased level of processor power to the visual content provision application. Conversely, the operating system 750 can use the remaining scope signal from the user-facing application 770 to make better determinations about when to initiate a risk response, rather than merely depending on a pre-determined timeout duration.

In some examples, the apparatus may estimate, or predict (e.g. at the VR sickness estimator 752) the predicted sickness risk factor for the viewer using a machine learning model. The machine learning model may have been pre-trained using one or more of prior captured sickness data for the viewer 754; and prior captured sickness data for one or more users who share one or more demographic factors with the viewer 754. A relatively simple model may be used to obtain a running general predicted sickness risk factor score. A more advanced model, such as a deep-learning model, may be used for more accurate predictions of sickness risk factor. Such a model may, for example, may be pre-trained using data from many other users having matching demographic factors with the current user, and this pre-trained model may provide a general prediction for the sickness risk factor. By then updating the model in use by the current user, the model may be fine-tuned for the current user. By using a machine learning model, more accurate estimations/predictions of the viewer's sickness risk may be obtained to help prevent unnecessary changes to the provided content.

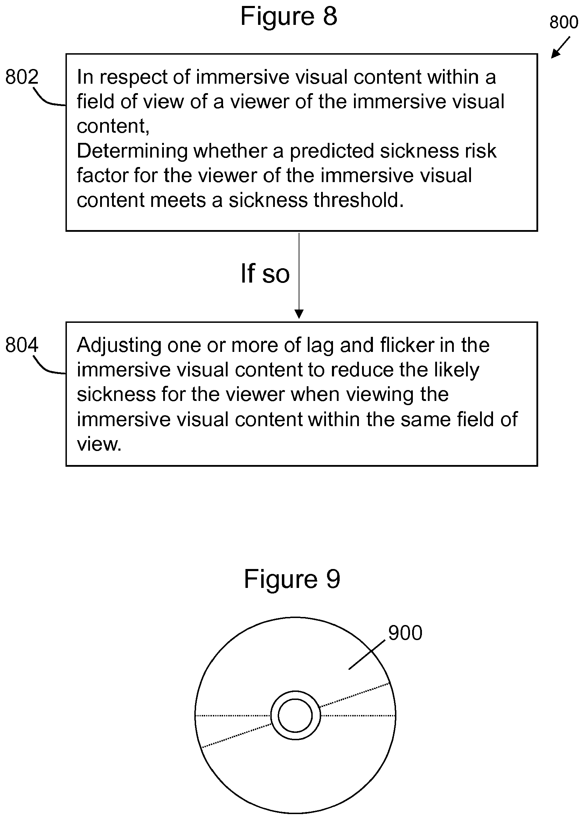

Figure 8 shows the main steps of a method 800 of using the present apparatus. The method 800 comprises, in respect of immersive visual content within a field of view of a viewer of the immersive visual content, determining whether a predicted sickness risk factor for the viewer of the immersive visual content meets a sickness threshold 802 and, if so, adjusting one or more of lag and flicker in the immersive visual content to reduce the likely sickness for the viewer when viewing the immersive visual content within the same field of view 804.

Figure 9 shows an example computer-readable medium 900 comprising a computer program configured to perform, control or enable the method of Figure 8 or any method described herein. The computer program may comprise computer code configured to perform the method(s). In this example, the computer/processor readable medium 900 is a disc such as a digital versatile disc (DVD) or a compact disc (CD). In other examples, the computer/processor readable medium 900 may be any medium that has been programmed in such a way as to carry out an inventive function. The computer/processor readable medium 800 may be a removable memory device such as a memory stick or memory card (SD, mini SD, micro SD or nano SD card).

It will be appreciated that references to "user" and "viewer" are interchangeable in reference to the person viewing VR or AR content. Further, references to "VR sickness" and similar also include effects in AR as well as VR.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some examples, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM, etc.), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed examples may consist of any such individual feature or combination of features. In view of the foregoing description it will be evident to a person skilled in the art that various modifications may be made within the scope of the disclosure.

While there have been shown and described and pointed out fundamental novel features as applied to different examples thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or example may be incorporated in any other disclosed or described or suggested form or example as a general matter of design choice. Furthermore, in the claims means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus comprising:
at least one processor; and
at least one memory including computer program code,
the at least one memory and the computer program code configured to, with the at least one processor, cause the apparatus to:
in respect of immersive visual content within a field of view of a viewer of the immersive visual content, determine whether a predicted sickness risk factor for the viewer of the immersive visual content meets a sickness threshold and, if so, adjust one or more of lag and flicker in the immersive visual content to reduce the likely sickness for the viewer when viewing the immersive visual content within the same field of view.

2. The apparatus of claim 1, wherein the apparatus is configured to adjust the one or more of lag and flicker in the immersive visual content to reduce the likely sickness for the viewer to a level below the sickness threshold.

3. The apparatus of claim 1 or claim 2, wherein the apparatus is configured to adjust the one or more of lag and flicker by:
causing a reduction of active computational processes of an immersive visual content apparatus providing the immersive visual content, to make one or more of processing capacity and memory capacity of the immersive visual content apparatus available for use in providing the immersive visual content with reduced one or more of lag and flicker.

4. The apparatus of any preceding claim, wherein the apparatus is configured to predict the sickness risk factor for the viewer.

5. The apparatus of claim 4, wherein the apparatus is configured to predict the sickness risk factor based on one or more of:
a received vestibular sensor input indicating a current vestibular state of the viewer;
a received viewer sickness rating indicating the likelihood of the viewer experiencing sickness; and
a received user demographic rating indicating the likelihood of a user experiencing sickness who shares one or more demographic factors with the viewer.

6. The apparatus of claim 4, wherein the apparatus is configured to predict the sickness risk factor based on a received predetermined immersive visual content sickness rating indicating the likelihood of the currently provided immersive visual content inducing sickness in a viewer.

7. The apparatus of any preceding claim, wherein the apparatus is configured to adjust the one or more of lag and flicker by one or more of:
causing a reduction in graphical complexity of the immersive visual content within the field of view;
causing simpler physical models to be used to simulate motion in the immersive visual content within the field of view;
causing a reduction in acceleration of one or more visual elements in the immersive visual content within the field of view; and
causing a reduction in motion blur of one or more visual elements in the immersive visual content within the field of view.

8. The apparatus of any preceding claim, wherein the apparatus is configured to:
if the predicted sickness risk factor meets the sickness threshold for a predetermined period of time; preload a next portion of the immersive visual content with a reduced predicted sickness risk factor, the next portion comprising one or more of the following factors reduced compared with the current immersive visual content:
graphical quality;
physical model complexity;
acceleration of one or more visual elements in the immersive visual content; and
motion blur of one or more visual elements in the immersive visual content.

9. The apparatus of any preceding claim, wherein the apparatus is configured to adjust flicker in the immersive visual content by performing flicker reduction for visual items at the periphery of the viewer's field of view by a greater amount than the flicker reduction performed for visual items at the centre of the viewer's field of view.

10. The apparatus of any preceding claim, wherein the apparatus is configured to:
periodically determine whether the predicted sickness risk factor for the viewer of the immersive visual content meets the sickness threshold with a frequency based on one or more of:
a predetermined time period for checking if the sickness threshold is met;
the predicted sickness risk factor for the user changing by a predetermined amount; and
the rate of change of the sickness risk factor for the user changing by a predetermined amount.

11. The apparatus of any preceding claim, wherein the apparatus is configured to:
determine that the predicted sickness risk factor for the viewer of the immersive visual content exceeds the sickness threshold by an amount greater than can be reduced by adjusting one or more of lag and flicker in the immersive visual content to reduce the likely sickness for the viewer; and one or more of
provide an indication to the viewer that sickness is likely; and
stop provision of the immersive visual content to the viewer.

12. The apparatus of any preceding claim, wherein the apparatus is configured to predict the sickness risk factor for the viewer using a machine learning model, wherein the machine learning model has been pre-trained using one or more of:
prior captured sickness data for the viewer; and
prior captured sickness data for one or more users who share one or more demographic factors with the viewer.

13. The apparatus of any preceding claim, wherein the sickness threshold is set for the viewer based on one or more of:
previous sickness data for the viewer obtained during viewing immersive visual content; and
previous sickness data for one or more users who share one or more demographic factors with the viewer.

14. A method comprising: in respect of immersive visual content within a field of view of a viewer of the immersive visual content, determining whether a predicted sickness risk factor for the viewer of the immersive visual content meets a sickness threshold and, if so, adjusting one or more of lag and flicker in the immersive visual content to reduce the likely sickness for the viewer when viewing the immersive visual content within the same field of view.

15. A computer readable medium comprising computer program code stored thereon, the computer readable medium and computer program code being configured to, when run on at least one processor, perform the method of claim 14.
